Europäisches Patentamt

(19) European Patent Office    (11) Numéro de publication: **0 228 326**
**B1**
Office européen des brevets

(12) **FASCICULE DE BREVET EUROPEEN**

(45) Date de publication du fascicule du brevet: (51) Int. Cl.⁴: **F16D 67/00, B60T 1/08**
**10.01.90**

(21) Numéro de dépôt: **86402678.6**

(22) Date de dépôt: **02.12.86**

---

(54) **Embrayage ralentisseur.**

---

(30) Priorité: **06.12.85 FR 8518061**

(73) Titulaire: **RENAULT VEHICULES INDUSTRIELS Société Anonyme dite:, 129 rue Servient "La Part Dieu", F-69003 Lyon(FR)**

(43) Date de publication de la demande:
**08.07.87 Bulletin 87/28**

(72) Inventeur: **Sibeud, Jean-Paul, Quartier Chaponnay sous Vigne, F-69360 Saint Symphorien d'Ozon(FR)**

(45) Mention de la délivrance du brevet:
**10.01.90 Bulletin 90/2**

(74) Mandataire: **Chassagnon, Jean-Alain et al, REGIE NATIONALE DES USINES RENAULT (S.0804), F-92109 Boulogne-Billancourt Cedex(FR)**

(84) Etats contractants désignés:
**BE DE ES GB IT**

(56) Documents cités:
**DE-A- 2 531 244**
**FR-A- 1 467 310**
**FR-A- 1 531 663**
**FR-A- 2 348 596**
**FR-A- 2 548 320**
**GB-A- 691 566**
**US-A- 1 839 096**

ACTORUM AG

## Description

L'invention est relative à un dispositif d'embrayage ralentisseur disposé entre un moteur et une boîte de vitesses et qui se monte notamment sur un véhicule industriel afin d'assurer à la fois la fonction d'embrayage et la fonction de ralentisseur.

L'introduction des moteurs Diesel suralimentés pose deux problèmes nouveaux par rapport au moteur Diesel à admission atmosphérique.

Le premier problème est relatif à l'embrayage. Le moteur Diesel suralimenté, partant de son fonctionnement à vide au ralenti, ne peut fournir son couple maximum qu'au bout d'un certain temps et après avoir délivré une certaine quantité d'énergie, que l'on devra dissiper dans l'embrayage dans le cas d'un démarrage en côte. Ceci pénalise beaucoup les embrayages classiques à friction dans leur durée de vie.

Le deuxième probleme est relatif au freinage du véhicule. Le moteur Diesel suralimenté fournit la même puissance qu'un moteur atmosphérique de cylindrée très supérieure. Il en résulte que le rapport du couple moteur au couple de retenue est bien plus élevé pour un moteur Diesel suralimenté que pour un moteur Diesel atmosphérique. Le moteur suralimenté retient beaucoup moins le véhicule que le moteur atmosphérique et l'usage d'un ralentisseur devient indispensable avec un moteur suralimenté.

Ces deux problèmes sont mal résolus par les solutions connues. En effet, avec les moteurs Diesel à admission atmosphérique dont le couple moteur était immédiatement disponible à bas régime, l'embrayage à friction permettait d'obtenir de bons résultats avec une fiabilité satisfaisante. Le moteur Diesel à admission atmosphérique muni d'un frein d'échappement offrait un ralentissement satisfaisant. Ces solutions éprouvées ne s'appliquent plus aussi bien aux moteurs suralimentés et à l'augmentation du taux de motorisation des véhicules industriels.

Dans les réalisations connues, l'embrayage dégrade pendant un temps une quantité d'énergie qu'il stocke dans son inertie thermique et évacue lentement dans les périodes où fermé il ne dissipe rien. Cet organe est conçu pour un usage sporadique et peu prolongé. Dans le cas contraire on le détruit. Les ralentisseurs connus sont prévus pour dégrader de l'énergie pendant de longues périodes et possèdent de ce fait un système d'évacuation d'énergie qui dans certains cas altère le rendement du vehicule.

Le document DE-A 2 531 244 décrit une machine électrique sur le volant du moteur qui sert à charger la batterie, au démarrage du moteur et au raleutisseur.

Le but de la présente invention est de proposer un dispositif unique, qui assure les fonctions d'embrayage et de ralentisseur d'un véhicule dans des conditions de fiabilité suffisante, et tout en assurant un bon rendement du véhicule.

Ceci est obtenu en associant un différentiel, une machine électrique et un embrayage qui est en fait un embrayage de pontage.

Selon un mode de réalisation de l'invention le dispositif d'embrayage ralentisseur comporte un système de transformation d'énergie mécanique associé à un embrayage, l'ensemble étant disposé entre le moteur et la boîte de vitesses du véhicule, de manière à pouvoir réaliser l'embrayage ou le ralentissement dudit véhicule. L'association du système de transformation d'énergie avec l'embayage se fait au moyen d'un système de différentiel, et le système de transformation d'énergie mécanique consiste en une machine électrique avec un dispositif de commande du type calculateur électronique. Le système de différentiel a son carter, qui porte les satellites, et, qui est entraîné par le moteur. Ce différentiel a un planétaire, qui est lié directement à l'arbre d'entrée de boîte de vitesses. L'autre planétaire du différentiel est lié à la machine électrique au moyen d'un plateau d'embrayage. Ce plateau d'embrayage peut être solidarisé avec l'arbre d'entrée de boîte de vitesses au moyen de l'embrayage.

Selon un mode de réalisation de l'invention la machine électrique est un frein à courants de FOUCAULT.

Selon un mode de réalisation de l'invention la machine électrique est un alternateur.

Selon un mode de réalisation de l'invention, le frein à courants de FOUCAULT comporte :
- un alternateur d'excitation avec un inducteur monté dans un stator et un induit monté dans un rotor avec un redresseur, qui est alimenté par ledit induit ;
- un inducteur monté dans le rotor et alimenté par ledit redresseur ;
- un induit monté dans le stator et associé à une chambre de circulation d'eau de refroidissement.

Selon un mode de réalisation de l'invention, l'alternateur comporte :
- un alternateur d'excitation avec un inducteur monté dans un stator et un induit monté dans un rotor avec un redresseur, qui est alimenté par ledit induit ;
- un inducteur monté dans le rotor et alimenté par ledit redresseur ;
- un induit monté dans le stator.

Selon un mode de réalisation de l'invention, le calculateur électronique agit sur le courant d'alimentation de l'inducteur de l'alternateur d'excitation.

Le dispositif d'embrayage ralentisseur selon l'invention présente ainsi l'avantage de réaliser une synergie entre ces deux fonctions différentes du véhicule par l'utilisation d'un organe commun de dégradation ou de transformation de l'énergie mécanique.

La machine électrique transforme l'énergie mécanique en énergie thermique que l'on évacue dans le système de refroidissement du moteur, c'est alors un frein à courants de FOUCAULT, ou bien en énergie électrique que l'on peut utiliser par ailleurs et c'est alors un alternateur.

Le différentiel permet d'introduire la machine électrique entre le moteur et la transmission du véhicule lorsque l'on veut obtenir un couplage avec glissement.

L'embrayage de pontage permet de supprimer tout glissement de la transmission en verrouillant le différentiel. La machine électrique alors solidaire de la transmission peut servir de ralentisseur.

Le passage d'un fonctionnement à l'autre est assuré par un calculateur électronique de pilotage sans lequel l'utilisation du dispositif décrit nécessiterait des opérations complexes que le conducteur devrait péniblement et fastidieusement exécuter.

D'autres caractéristiques et avantages de la présente invention ressortiront de la description qui suit le mode de réalisation donné à titre d'exemples en référence aux dessins annexés sur lesquesl :

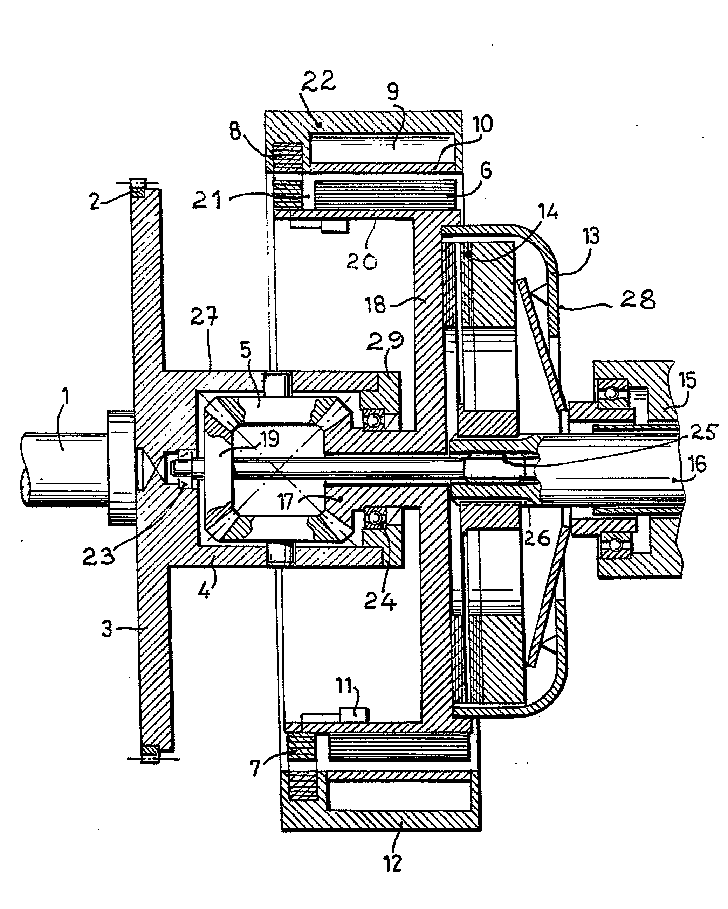

- la figure 1 est une vue schématique en coupe du dispositif selon l'invention.

Le vilebrequin 1 du moteur thermique est lié à un volant 3 muni d'une couronne dentée de démarrage 2 et d'un carter de différentiel 4 qui porte des pignons satellites 5 du différentiel référencé 27 dans son ensemble.

Un pignon planétaire 19 du différentiel 27 entraîne l'arbre de sortie du système, qui est aussi l'arbre d'entrée 16 de boîte de vitesses au moyen de cannelures 25.

L'arbre 16 porte le disque d'embrayage 14, qui est lié par des cannelures 26 audit arbre 16.

Le planétaire 19 est porté, à l'autre extrémité, par un roulement 23 qui est monté dans le carter 4 du différentiel 27.

L'autre planétaire 17 du différentiel 27 est monté dans le carter 4 par l'intermédiaire d'un roulement 24 logé dans un couvercle 29.

Le planétaire 17 entraîne un plateau d'embrayage 18 qui se prolonge par une couronne 20, et qui peut être solidarié avec l'arbre d'entrée 16 de boîte de vitesses au moyen de l'embrayage référencé 28 dans son ensemble.

La couronne 20 porte l'ensemble du rotor 21 de la machine électrique.

L'ensemble du stator 22 de la machine électrique est monté sur un élément de liaison 12 et disposé entre la cloche d'embrayage et le carter moteur.

La machine électrique peut être un frein à courants de FOUCAULT ou un alternateur.

Le frein à courants de FOUCAULT comporte :
- un alternateur d'excitation avec un inducteur 8 monté dans le stator 22 et un induit 7 monté dans le rotor 21 avec un redresseur 11, qui est alimenté par ledit induit 7 ;
- un inducteur 6 monté dans le rotor 21 et alimenté par ledit redresseur 11 ;
- un induit 10 qui est une paroi monté dans le stator 22 et associée à une chambre 9 de circulation d'eau de refroidissement.

L'alternateur comporte :
- un alternateur d'excitation avec un inducteur 8 monté dans le stator 22 et un induit 7 monté dans le rotor 21 avec un redresseur 11, qui est alimenté par ledit induit 7 ;
- un inducteur 6 monté dans le rotor 21 et alimenté par ledit refresseur 11 ;
- un induit monté dans le stator 22.

Le pignon planétaire 17 entraîne :
- le plateau de l'embrayage 18,
- le mécanisme d'embrayage 13,
- l'inducteur du frein à courants de FOUCAULT ou de l'alternateur 6,
- l'induit de l'alternateur d'excitation 7,
- les redresseurs de pôle de l'inducteur 11.

L'élément de liaison 12 entre la cloche d'embrayage et le carter moteur porte l'inducteur 8 de l'alternateur d'excitation et une chambre de circulation d'eau de refroidissement 9 dont la paroi 10 face à l'inducteur 6 est le siège des courants de FOUCAULT. Cette chambre à circulation d'eau peut être remplacée par un induit statorique d'alternateur dans le cas où la machine de freinage est un alternateur permettant de transformer l'énergie mécanique freinée en énergie électrique utilisable.

L'embrayage 13 est classiquement commandé par une butée 15.

Si le véhicule roule normalement, l'embrayage 13 est fermé et le differentiel inopérant, l'arbre d'entrée 16 tourne à la vitesse du vilebrequin 1. Le couple moteur est intégralement transmis.

Si on injecte un courant dans l'inducteur 8 de l'alternateur d'excitation, on exite par l'induit 7, le redresseur 11, les pôles de l'inducteur 6 du frein à courants de FOUCAULT ou de l'alternateur. Ceci produit une absorption d'énergie sur la transmission. Cette énergie dans le cas du frein à courants de FOUCAULT est dissipée en chaleur et évacuée vers le système de refroidissement du moteur par l'eau circulant dans la chambre 9.

Dans le cas d'un alternateur de l'énergie électrique est disponible pour tout usage.

Dans les deux cas le système fonctionne en ralentisseur et l'on peut doser le ralentissement en agissant sur l'intensité du courant injecté dans l'inducteur 8 par un dispositif de commande du type calculateur électronique.

Le dispositif suivant l'invention utilisant un alternateur d'excitation a plusieurs avantages :
- Par une bonne conception des machines les temps de réponse peuvent être courts.
- L'énergie d'excitation est prélevée sur l'arbre que l'on veut freiner, elle contribue à l'effet désiré et surtout n'est pas prélevée sur une source dont le rendement énergétique par rapport au carburant du véhicule est mauvais.
- Il n'est pas fait usage de contacts glissants pour amener l'énergie d'excitation au rotor.

Examinons tout d'abord le fonctionnement du dispositif lorsque le véhicule est à l'arrêt avec la boîte de vitesses au point mort.

Pour engager un rapport, première ou march arrière, il faut empêcher l'arbre 16 de tourner. Pour cela la procédure ci-après est utilisée :
- on ferme l'embrayage 13,
- on accélère le moteur à deux fois sa vitesse de ralenti,
- on ouvre l'embrayage 13 et l'ensemble lié au planétaire 17 continu à tourner à deux fois la vitesse de ralenti sur son inertie,
- on laisse revenir la vitesse moteur au ralenti.

Lorsque la vitesse moteur atteint le ralenti la vitesse de l'arbre 16 s'annule et on peut enclencher un rapport.

Cette procédure difficile pour un opérateur humain est très aisée pour un calculateur électronique convenablement programmé.

Examinons maintenant le fonctionnement du dispositif lors du démarrage du véhicule en palier ou en pente moyenne.

L'embrayage 13 est ouvert.

Lorsqu'un rapport est engagé, et le véhicule à l'arrêt, la vitesse de l'arbre d'entrée BV 16 est nulle, la vitesse vilebrequin 1 est la vitesse de ralenti et le planétaire 17 tourne à deux fois la vitesse de ralenti.

La procédure de démarrage est obtenue par action d'un calculateur qui mesure la vitesse du planétaire 17 et l'asservit à rester inférieurs ou égale à une certaine vitesse, par exemple le double de la vitesse de ralenti. Ceci est réalisé par une action du calculateur sur l'excitation du frein à courants de FOUCAULT afin qu'il développe un couple de freinage adapté à l'objectif visé.

Si le conducteur accélère le moteur, la vitesse moteur deviendra supérieure à celle du ralenti, mais le calculateur interdisant au planétaire 17 de s'accélérer provoquera un transfert par le différentiel de l'accroissement de la vitesse moteur vers un accroissement de la vitesse du planétaire 19, c'est-à-dire de l'arbre 16, c'est-à-dire le démarrage du véhicule.

Lorsque les vitesses de l'arbre 1 et des planétaires 17 et 19 seront égales, on peut fermer l'embrayage 13 et le démarrage sera terminé sans que l'embrayage ait dissipé d'énergie, son rôle étant de ponter des pièces tournant dans le même sens et à la même vitesse.

Le dispositif selon l'invention présente ainsi les avantages suivants:

- Le couple de démarrage est dosé à volonté par le concuteur qui agit sur l'accélérateur.

-L'énergie est dissipée par le frein à courants de FOUCAULT dans l'eau de refroidissement du moteur ou dans un circuit spécialisé si on utilise un alternateur à la place du frein à courants de FOUCAULT.

Il n'y a donc aucune usure et on peut utiliser autant que nécessaire ce coupleur de démarrage et en particulier atteindre le fonctionnement suralimenté du moteur.

·Le couple transmis pendant le démarrage n'est que la moitié du couple moteur. Lorsque l'embrayage de pontage se ferme on peut disposer du couple moteur total lorsque le couple du frein à courants de FOUCAULT sera annulé. Ceci peut être obtenu avec une progressivité suffisante pour eviter les secousses.

Examinons le fonctionnement du dispositif lors du démarrage en forte côte.

La procédure décrite précédemment ne permettra pas au moteur de s'accélérer si le couple nécessaire au démarrage est supérieur à la moitié de ce que peut produire le moteur si cet état est constaté au bout d'un temps suffisant pour permettre au moteur de s'établir en fonctionnement suralimenté et que simultanément l'accélérateur est pleinement sollicité deux solutions sont possible.

On peut alors dans un premier mode de réalisation informer le conducteur, ou l'automatisme qui le remplace, qu'il faut utiliser le rapport de première lente pour démarrer dans les conditions présentes.

On peut aussi dans un deuxième mode de réalisation mettre en oeuvre une deuxième procédure différente de la première par le fait que l'on va laisser croître la vitesse moteur et la vitesse des inerties liées au planétaire 17 afin de stocker une certaine quantité de mouvement dans ces inerties. Lorsque l'on aura atteint une certaine vitesse moteur et inerties liées au planétaire 17 on fermera l'embrayage 13 qui transfèrera ces quantités de mouvement au véhicule dont le démarrage sera ainsi assuré.

Examinons le fonctionnement du dispositif lors des changements de vitesse.

Tout changement de rapport comporte trois phases dans son exécution.

La première phase est l'ouverture de la transmission pour annuler le couple transmis et permettre le dégagement des crabots.

Cette phase doit être la plus rapide possible parce qu'elle intervient dans le temps total de changement de rapport. Elle est délicate pour les rapports inférieurs parce qu'elle libère l'énergie potentielle de torsion des arbres de roues et peut provoquer des oscillations perturbatrices.

La deuxième phase est la synchronisation provoquée pendant que la boîte de vitesses est au point mort.

Cette phase est différente selon le type de changement de rapport exécuté.

Progression de rapport : il faut ralentir l'arbre d'entrée de la boîte de vitesses.

Rétrogradation de rapport : il faut accélérer l'arbre d'entrée de la boîte de vitesses.

La troisième phase est la fermeture de la transmission pour rétablir le couple moteur le plus rapidement possible mais sans discontinuité susceptible d'exciter en oscillations la transmission ou de générer des accélérations longitudinales du véhicule inconfortables.

La phase d'ouverture de la transmission ou la phase de rupture du couple transmis, débute toujours par l'ouverture de l'embrayage 28 de pontage qui est une opération très rapide.

Les oscillations de torsion seront rapidement amorties par les frottements internes du moteur.

Elle se termine par le constat de la position point mort de la boîte de vitesses obtenu par détecteurs. physiques ou calculs.

La phase de synchronisation présente deux cas.

Dans le cas de la progression de rapport, en même temps que l'on donne l'ordre d'ouverture de l'embrayage 28 de pontage, on commande la coupure d'injection et la fermeture du frein sur l'échappement. Le séquencement de ces ordres étant évidemment conçu en prenant en considération les retards purs propres à chaque action et l'annulation du couple nécessaire au décrabotage du rapport engagé.

Le temps d'obtention de la synchronisation pourrait être relativement faible compte tenu de la faible inertie propre du moteur, de l'utilisation d'un frein d'échappement, et de la présence d'un diférentiel, qui divise par deux les variations de vitesses d'entrée par rapport aux vitesses de sortie.

Dans le cas de la rétrogradation de rapport, la séquence d'ordre est alors :

- ouverture de l'embrayage 28 de pontage,

- dès réception de l'information boîte de vitesses au point mort, on donne l'ordre de position 4/4 du moteur.

Le synchronisme peut alors être atteint au bout d'un temps relativement bref.

La phase de fermeture de la transmission du couple présente deux cas.

Dans le cas où l'on se trouve après une progression de rapport, la vitesse de sortie est synchrone, mais la vitesse du rotor 21 est supérieur à la vitesse de sortie.

Si on ferme l'embrayage 28 de pontage, on apportera une certaine quantité de mouvement au véhicule qui favorisera une reprise en côte.

Par contre en palier il peut y avoir un excès d'accélération inconfortable que l'on peut modérer en coupant l'injection du moteur pendant un temps bref au moment de la fermeture de l'embrayage 28 de pontage.

Ceci suppose un automatisme capable de détecter si la progression de rapport est éxécutée en palier ou en côte. Ceci n'est pas un problème pour un système expert.

Dans le cas où l'on se trouve après une rétrogradation, la vitesse de sortie est plus grande que la vitesse du rotor 21, qui a conservé la vitesse du rapport antérieur.

Si le moteur accélère le véhicule, la vitesses du rotor 21 va croître et lorsuq'il sera synchrone avec la vitesse de sortie on pourra fermer l'embrayage 28 de pontage sans problème.

Si le moteur décélère le véhicule, la vitesse du rotor 21 va décroître et il faut maintenir le moteur accéléré pour obtenir le synchronisme avec la vitesse de sortie et fermer l'embrayage 28 de pontage.

En conclusion dans tous les cas la vitesse du rotor 21 est accélérée par le moteur, il rejoint la vitesse de sortie au synchronisme, l'embrayage 28 peut être fermé sans dissipation d'énergie ni à coups, et cette disposition permet d'apporter un remède simple aux problèmes de confort sur rétrogradation de rapport (problème difficile à résoudre autrement).

Les durées de fermeture de la transmission ne sont pas prises en compte dans la durée du changement de rapport parce qu'elles ne sont pas des phases où le couple transmis est nul et ne sont pas perturbatrices de la progression du véhicule de ce fait.

Le dispositif selon l'invention présente ainsi les avantages suivants :
- Progression de rapport : En côte il est possible d'utiliser l'énergie cinétique du rotor 21 pour faciliter la reprise.
- Rétrogradation : Une solution d'amélioration du confort sans système sophistiqué.
- Oscillations de transmission : On peut utiliser le moteur comme amortisseur efficace de ces oscillations.
- Le frein à courants de FOUCAULT ne sert pas à la synchronisation.
- L'inertie du rotor 21 n'intervient pas directement par sa valeur dans les opérations. En première approximation une valeur élevée ne serait pas gênante.

On peut également remarquer que l'on peut utiliser le dispositif pour le lancement du moteur par inertie. Pour cela il suffit de réaliser les opérations suivantes :
- mettre la boîte de vitesses au point mort,
- ouvrir l'embrayage 28,
- lancer le rotor 21 à une vitesse suffisante par un moteur électrique ou pneumatique auxiliaire,
- fermer l'embrayage 28,
- le moteur est alors mis en vitesse par l'inertie de l'embrayage 28.

Ceci est intéressant dans le cas où l'on a un alternateur au lieu du frein à courants de FOUCAULT, car dans ce cas l'alternateur peut être utilisé comme moteur de lancement de l'inertie de l'embrayage 28.

De ce fait la puissance nécessaire est alors beaucoup plus faible qu'avec un démarreur conventionnel.

## Revendications

1. Dispositif d'embrayage ralentisseur comportant un système de transformation d'énergie mécanique associé à un embrayage (28), l'ensemble étant disposé entre le moteur et la boîte de vitesse du véhicule, de manière à pouvoir réaliser l'embrayage ou le ralentissement dudit véhicule; le système de transformation d'énergie mécanique consistant en une machine électrique et un dispositif de commande coopérant avec la machine électrique, caractérisé en ce que l'association du système de transformation d'énergie avec l'embrayage se fait au moyen d'un système de différentiel (27) qui a son carter (4), portant les satellites (5), qui est entraîné par le moteur; avec un planétaire (19) lié directement à l'arbre (16) d'entrée de boîte de vitesses; et avec l'autre planétaire (17) lié à la machine électrique au moyen du plateau d'embrayage (18); qui peut être solidarisé avec l'arbre d'entrée (16) de boîte de vitesses au moyen de l'embrayage (28); le dispositif de commande étant un calculateur électronique.

2. Dispositif d'embrayage ralentisseur selon la revendication 1, caractérisé en ce que la machine électrique est un frein à courants de Foucault.

3. Dispositif d'embrayage ralentisseur selon la revendication 1, caractérisé en ce que la machine électrique est un alternateur.

4. Dispositif d'embrayage selon la revendication 2, caractérisé en ce que le frein à courants de Foucault comporte:
– un alternateur d'excitation avec un inducteur (8) monté dans le stator (22) et un induit (7) monté dans le rotor (21) avec un redresseur (11), qui est alimenté par ledit induit (7);
– un inducteur (6) monté dans le rotor (21) et alimenté par ledit redresseur (11),
– un induit (10) monté dans le stator (22) et associé à une chambre (9) de circulation d'eau de refroidissement.

5. Dispositif d'embrayage selon les revendications 1 et 3, caractérisé en ce que l'alternateur comporte:
– un alternateur d'excitation avec un inducteur (8) monté dans le stator (22) et un induit (7) monté dans le rotor (21) avec un redresseur (11), qui est alimenté par ledit induit (7);
– un inducteur (6) monté dans le rotor (21) et alimenté par le redresseur (11);
– un induit monté dans le stator (22).

6. Dispositif d'embrayage selon les revendications 1 et 4 ou 1 et 5, caractérisé en ce que le calculateur électronique agit sur le courant d'alimentation de l'inducteur (8) et l'alternateur d'excitation.

**Patentansprüche**

1. Kupplungs-Verzögerungs-Vorrichtung, mit einem System zur Umwandlung mechanischer Energie, das einer Kupplung 28 zugeordnet ist, wobei der Aufbau zwischen Motor und Getriebe des Fahrzeugs derart angeordnet ist, daß er das Kuppeln und das Verzögern des Fahrzeugs bewirkt; das System zur Umwandlung der mechanischen Energie besteht aus einer elektrischen Maschine und einer Steueranordnung, die mit der elektrischen Maschine zusammenwirkt, dadurch gekennzeichnet, daß die Zuordnung des Systems zur Umwandlung der Energie zur Kupplung mittels einer Differentialanordnung 27 erfolgt, dessen Gehäuse 4 Kegelräder 5 trägt und das vom Motor angetrieben wird; ein Achswellenrad 19 ist direkt mit der Eingangswelle 16 des Getriebes verbunden und ein Achswellenrad 17 ist mit der elektrischen Maschine mittels der Kupplungsplatte 18 verbunden, die mit der Eingangswelle 16 des Getriebes mittels einer Kupplung 28 verbindbar ist; die Steueranordnung ist ein elektronischer Rechner.

2. Kupplungs-Verzögerungs-Vorrichtung nach Anspruch 1, dadurch gekennzeichnet, daß die elektrische Maschine eine mit Foucault-Strömen arbeitende Bremse ist.

3. Kupplungs-Verzögerungs-Vorrichtung nach Anspruch 1, dadurch gekennzeichnet, daß die elektrische Maschine ein Wechselstromgenerator ist.

4. Kupplungs-Verzögerungs-Vorrichtung nach Anspruch 2, dadurch gekennzeichnet, daß die mit Foucault-Strömen arbeitende Bremse aufweist:
- einen Erregerstromgenerator mit einer Erregerwicklung 8, die im Stator 22 angeordnet ist und mit einem Läufer 7, der im Rotor 21 mit einem Gleichrichter 11 angeordnet ist, welcher vom Läufer 7 gespeist wird;
- eine Erregerwicklung 6, die im Rotor 21 angeordnet ist und vom Gleichrichter 11 gespeist wird und
- einen Läufer 10, der im Stator 22 angeordnet ist und einer Kammer 9 für einen Kühlwasserkreislauf zugeordnet ist.

5. Kupplungs-Verzögerungs-Vorrichtung nach Ansprüchen 1 und 3, dadurch gekennzeichnet, daß der Wechselstromgenerator aufweist:
- einen Erregergenerator mit einer Erregerwicklung 8, die im Stator 22 angeordnet ist und einen Läufer 7, der im Rotor 21 mit einem Gleichrichter 11 angeordnet ist, welcher vom Läufer 7 gespeist wird;
- einen Läufer 6, der im Rotor 21 angeordnet ist und vom Gleichrichter 11 gespeist wird und
- einen Läufer im Stator 22.

6. Kupplungs-Verzögerungs-Vorrichtung nach Ansprüchen 1 und 4 oder 1 und 5, dadurch gekennzeichnet, daß der elektrische Rechner auf den Speisestrom für die Erregerwicklung 8 des Erregergenerators einwirkt.

**Claims**

1. Decelerating clutch device comprising a mechanical energy conversion system associated with a clutch (28), the whole being disposed between the engine and the gear-box of the vehicle so that it is possible to perform a clutch or a vehicle deceleration function; the mechanical energy conversion system consists of an electrical machine and an operating device co-operating with the electrical machine, characterised in that the association of the energy conversion system with the clutch employs a system of differential (27) which has its casing (4) carrying satellites (5) which is driven by the engine, with a planet wheel (19) linked directly to the gear-box input shaft (16), and with the other planet wheel (17) linked to the electrical machine by means of a clutch plate (18) which can be rendered rigid with the gear-box input shaft (16) by the clutch (28), the operating device being an electronic computer.

2. Decelerating clutch device according to Claim 1, characterised in that the electrical machine is a Foucault current brake.

3. Decelerating clutch device according to Claim 1, characterised in that the electrical machine is an alternator.

4. Clutch device according to Claim 2, characterised in that the Foucault current brake comprises:
- an energising alternator with a field coil (8) mounted in the stator (22) and an armature (7) mounted in the rotor (21) with a rectifier (11) which is supplied by the said armature (7);
- a field coil (6) mounted in the rotor (21) and supplied by the said rectifier (11),
- an armature (10) mounted in the stator (22) and associated with a cooling water circulating chamber (9).

5. Clutch device according to Claims 1 and 3, characterised in that the alternator comprises:
- an energising alternator with a field coil (8) mounted in the stator (22) and an armature (7) mounted in the rotor (21) with a rectifier (11) which is supplied by the said armature (7);
- a field coil (6) mounted in the rotor (21) and supplied by the rectifier (11);
- an armature mounted in the stator (22).

6. A clutch device according to Claims 1 and 4 or 1 and 5, characterised in that the electronic computer acts on the current supplying the field coil (8) and the energising alternator.